# EUROPÄISCHE PATENTANMELDUNG

(11) **EP 0 911 558 A2**
(43) Veröffentlichungstag der Anmeldung: **28.04.1999**
(21) Anmeldenummer: 98118402.1
(22) Anmeldetag: 29.09.1998
(51) Int. Cl.: F16K 25/00

(54) **Ventil für korrosive Gase**

(30) Priorität: 23.10.1997 DE 19746787
(71) Anmelder: MESSER GRIESHEIM GMBH, 60547 Frankfurt (DE)
(72) Erfinder: Pongraz, Johann, 47259-Duisburg (DE); Eschwey, Manfred Dr., 40489 Düsseldorf (DE)

(57) **Zusammenfassung**

Das Ventil enthält einen Ventilkörper oder Ventilsitz und ein bewegliches, schließendes Teil aus unterschiedlichen Metallen. Beispielsweise besteht der Ventilkörper aus Edelstahl und das bewegliche, schließende Teil, z. B. die Ventilspindel, aus einem kupferhaltigen Metall wie Messing oder umgekehrt. Ventilsitz und Ventilspindel sind vorzugsweise austauschbar. Das Ventil eignet sich besonders für korrosive Gase wie fluorhaltige Gase.

## Beschreibung

Die Erfindung betrifft ein Ventil, bei dem Ventilsitz und Absperrspindel aus unterschiedlichen Metallen besteht.

Übliche Absperrventile (Flaschenventile) bestehen aus einem Ventilgehäuse, mit Anschlüssen für Gasflasche und Verbraucher. In der im Ventilgehäuse verlaufenden Verbindung zwischen diesen beiden Anschlüssen ist die eigentliche Absperreinichtung angeordnet, in der Regel eine durch Handrad betätigte Spindel mit Sitzabdichtung, die gegen einen im Ventilgehäuse fest angeordneten Ventilsitz gestellt wird.

Flaschenventile sind allgemein beschreiben in: Gasehandbuch, 3. Auflage, überarbeiteter Nachdruck 1989; Herausgeber: Messer Griesheim GmbH, Abt. Öffentlichkeitsarbeit, Frankfurt/M.; S. 49-52.

Besonders kritisch ist die Wechselwirkung von Teilen eines Ventiles mit Reaktivgasen wie fluorhaltigen Gasen. Restfeuchte und Reaktivgas führen zu Korrosion und Schädigung des Ventils. Insbesondere führen korrosive Gase bei Absperrventilen und Durchgangsventilen zu gravierenden Ausfällen der Dichtheitsfunktion. Die Schädigung ist bei fluorhaltigen Gasen sehr gravierend, da diese Störungen zum Ablösen der Passivschicht der metallischen Oberflächen und zum Ausbrennen der Ventile führen.

Der Erfindung liegt daher die Aufgabe zugrunde, ein Absperrventil für Druckgasbehälter zu schaffen, welches gegenüber Reaktivgasen wie fluorhaltigen Gasen stabil ist.

Ausgehend von dem im Oberbegriff des Anspruchs 1 berücksichtigten Stand der Technik, ist diese Aufgabe erfindungsgemäß gelöst mit den im kennzeichnenden Teil des Anspruchs 1 angegebenen Merkmalen.

Eine vorteilhafte Weiterbildung der Erfindung ist in den Unteransprüchen angegeben.

Ventile gemäß der Erfindung sind alle Ventiltypen, die einen Ventilkörper und bewegliche Teile zum Schließen des Gasweges enthalten. Solche Ventile sind beispielsweise Stopfbuchsventile, Membranventile und Faltenbalgventile.

Ventilsitz oder Ventilkörper und bewegliche Teile (z. B. Absperrspindel, insbesondere Unterspindel) des Ventiles gemäß der Erfindung bilden eine Materialkombination zweier verschiedener Metalle, vorzugsweise einem kupferhaltigen Metall und einem Edelstahl. Das heißt Ventilsitz oder Ventilkörper sind beispielsweise aus Edelstahl und Absperrspindel aus kupferhaltigem Metall. Die umgekehrte Materialausstattung der genannten Teile ist ebenso möglich.

Kupferhaltige Metalle sind Metalle und Legierungen, beispielsweise Messing, Bronze und Kupfer.

Edelstähle sind Stahlsorten mit zulegierten Stahlveredlern (z. B. Aluminium, Chrom, Cobalt, Kupfer, Mangan, Molybdän, Nickel, Niob, Silizium, Titan, Vanadium, Wolfram). Bevorzugte Edelstähle sind Ni-Basis-Legierungen (z. B. Hastelloy).

Fluorhaltige Gase sind z. B. Fluorgas oder dessen Abmischung mit einem Gas oder Gasgemisch, insbesondere mit Inertgasen wie Stickstoff. Fluorhaltige Gase beinhalten auch Gase, die eine fluorabgebende Verbindung wie BrF₃, ClF₃, SF₄, IF₅, NF₃, SbF₅, MoF₆, WF₆, UF₆ enthalten, insbesondere deren Abmischungen mit einem inerten Gas oder Gasgemisch.

Reaktive Gase sind neben fluorhaltigen Gasen z. B. Sauerstoff, Ozon-Gasgemische, HF-enthaltende Gase, HCl-enthaltende Gase.

In besonders einfacher Weise kann zum Beispiel bei stopfbuchsgedichteten Ventilen die austauschbare Unterspindel aus Edelstahl durch eine Unterspindel aus Messing ersetzt werden. In aller Regel ist ein Austausch von beweglichen Teilen auch bei sämtlichen anderen Ventil-Bauformen, zum Beispiel bei Membran- oder Faltenbalgventilen möglich.

Die höhere Wärmeleitfähigkeit von Messing gegenüber Edelstahl setzt die Wahrscheinlichkeit eines Ventilausbrandes stark herab.

Der mechanische Verschleiß im Ventilsitzbereich wird durch einen größeren Härteunterschied bei der Materialkombination Messing/Edelstahl im Vergleich zu Edelstahl/Edelstahl stark herabgesetzt. Dies führt zu einer deutlich verbesserten Standzeit (in der Regel eine Verdoppelung der Standzeit). Selbstverständlich kann auch in umgekehrter Weise der Ventilkörper in Messing ausgeführt werden, während die beweglichen, schließenden Teile aus Edelstahl bestehen.

Ventilsitz und Unterspindel sind vorzugsweise austauschbare Bauteile.

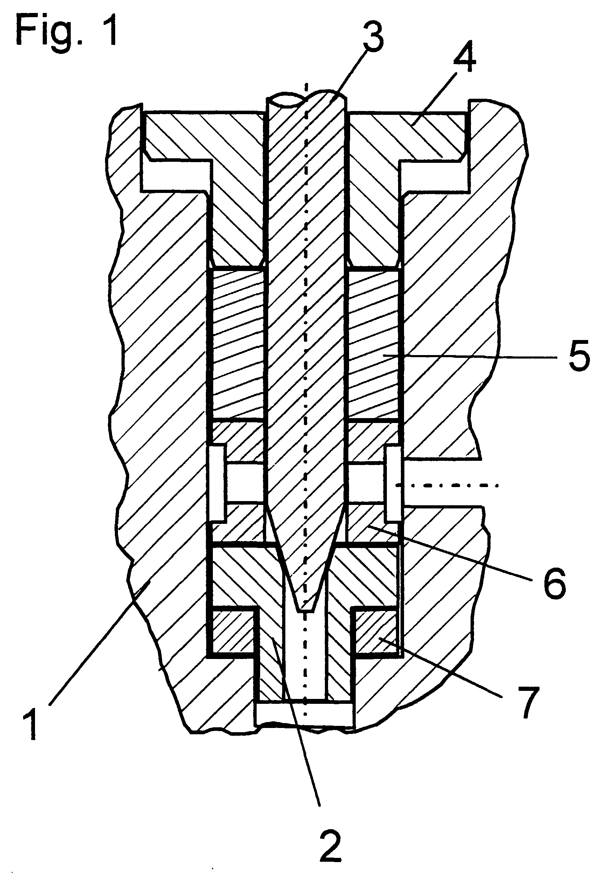

Fig. 1 zeigt als Beispiel die Funktionsteile eines Stopfbuchsventils (Längsschnitt) mit den Teilen: Ventilkörper 1, Ventilsitz 2 aus Edelstahl, Spindel 3 aus Messing, Kopfschraube 4, Spindelführung 5 (Packung), Zwischenstück 6 und Dichtung 7.

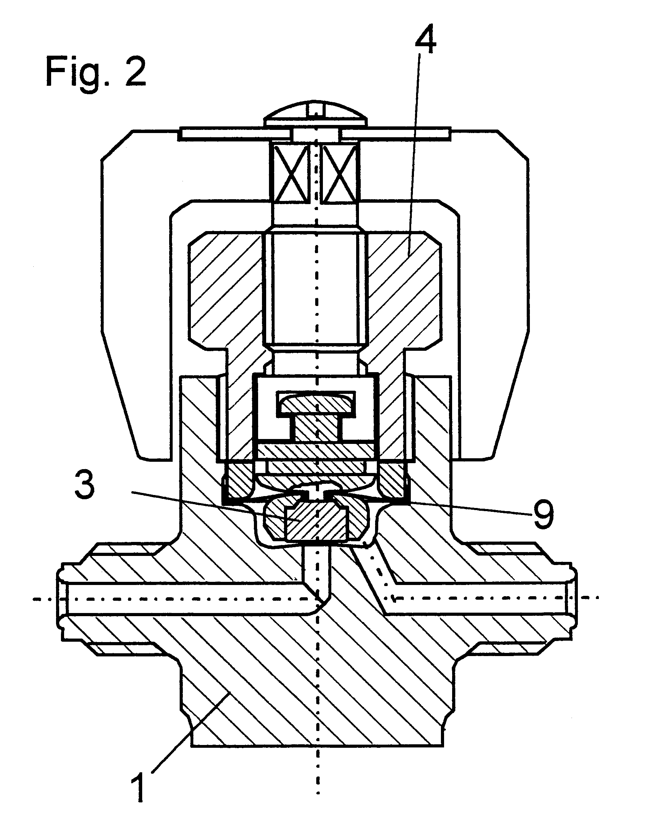

Fig. 2 zeigt ein Beispiel für ein Membranventil (Längsschnitt). Der Ventilkörper 1 ist aus Edelstahl. Der Ventilsitz ist Teil des Ventilkörpers 1. Die Spindel 3 (Unterspindel) ist aus Messing und dichtet gegen den Ventilsitz ab. Die Unterspindel ist Teil der Spindel. Die Membran 3 dichtet das Ventil nach außen ab. Die Spindel wird durch die Kopfschraube 4 geführt.

## Patentansprüche

1. Ventil mit Ventilkörper und beweglichen, schließenden Teilen aus unterschiedlichen Metallen.

2. Ventil nach Anspruch 1, dadurch gekennzeichnet, daß der Ventilkörper oder Ventilsitz aus Edelstahl und mindestens ein bewegliches, schließendes Teil aus einem kupferhaltigen Metall besteht.

3. Ventil nach Anspruch 1 oder 2, dadurch gekennzeichnet, daß das Ventil ein Stopfbuchsventil, ein Membranventil oder ein Faltenbalgventil ist.

4. Ventil nach einem der Ansprüche 1 bis 3, dadurch gekennzeichnet, daß das bewegliche schließende Teil eine Ventilspindel oder Ventilunterspindel ist.

5. Ventil nach einem der Ansprüche 1 bis 4, dadurch gekennzeichnet, daß der Ventilsitz austauschbar ist.

6. Ventil nach einem der Ansprüche 1 bis 5, dadurch gekennzeichnet, daß das bewegliche schließende Teil eine Ventilspindel ist und die Ventilspindel austauschbar ist.

7. Ventil nach einem der Ansprüche 1 bis 5, dadurch gekennzeichnet, daß das bewegliche schließende Teil eine Ventilspindel ist und die Ventilspindel aus mehreren Teilen mit mindestens einem austauschbaren Teil besteht.

8. Verwendung eines Ventils gemäß einem der Ansprüche 1 bis 7 für reaktive Gase, fluorhaltige Gase oder Fluor freisetzende Gase.

9. Verwendung nach Anspruch 8, dadurch gekennzeichnet, daß das Ventil als Absperrventil oder Flaschenventil für Druckgasbehälter dient.
